Europäisches Patentamt

European Patent Office

Office européen des brevets

(19)

(11) Veröffentlichungsnummer: **0 100 460**
**B1**

(12) **EUROPÄISCHE PATENTSCHRIFT**

(45) Veröffentlichungstag der Patentschrift: **25.05.88**

(51) Int. Cl.⁴: **G 06 F 13/18**

(21) Anmeldenummer: **83106676.6**

(22) Anmeldetag: **07.07.83**

(54) Anforderungsauswahlsteuerung in einem Prozessor-Speicher-Verbindungssystem.

(30) Priorität: **02.08.82 DE 3228788**

(43) Veröffentlichungstag der Anmeldung:
**15.02.84 Patentblatt 84/07**

(45) Bekanntmachung des Hinweises auf die
Patenterteilung:
**25.05.88 Patentblatt 88/21**

(84) Benannte Vertragsstaaten:
**AT BE CH DE FR GB IT LI NL SE**

(56) Entgegenhaltungen:
**EP-A-0 064 759**
**EP-A-0 069 886**
**US-A-3 478 321**

**PATENTS ABSTRACTS OF JAPAN, Band 6, Nr.
175 (P-141) (1053), September 9, 1982 &
JP-A-5790738**

**NEW ELECTRONICS, Band 9, Nr. 15, Juli 27,
1976, LONDON (GB), Seiten 22-23, 25-26,
SIGNETICS CORPORATION: "Applications of
f.p.l.a.s."**

(73) Patentinhaber: **Siemens Aktiengesellschaft
Berlin und München
Wittelsbacherplatz 2
D-8000 München 2 (DE)**

(72) Erfinder: **Geissdörfer, Werner, Dipl.-Ing.
Eblherstrasse 2 a
D-8000 München 83 (DE)**

(56) Entgegenhaltungen:
**ELECTRONIC DESIGN, Nr.11, Mai 24, 1979,
ROCHELLE PARK (US), S. 128-133, DURHAM:
"Fast LSI arbiters supervise priorities for
busacces in multiprocessorsystems"**

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische
Patent Einspruch einlegen. Der Einspruch ist schriftlich einzureichen und zu begründen. Er gilt erst als eingelegt,
wenn die Einspruchsgebühr entrichtet worden ist (Art. 99(1) Europäisches Patentübereinkommen).

Courier Press, Leamington Spa, England.

**Beschreibung**

In Datenverarbeitungsanlagen mit mehreren Prozessoren und einem zentralen Speicher bzw. einer zentralen Steuerung können Operationsanforderungen der Prozessoren gleichzeitig oder nahezu gleichzeitig auftreten. Den Prozessoren bzw. ihren Anforderungen müssen daher unterschiedliche Prioritäten zugeordnet werden. Eine Prioritätslogik entscheidet, welche Anforderung als nächste bearbeitet wird.

Um alle Prozessoren möglichst gleich zu behandeln, wurde bereits vorgeschlagen, eine Prioritätsauswahlschaltung mit einem einfachen Vertauschungsalgorithmus für die Prioritätsreihenfolge einzusetzen, indem beispielsweise ein die Prioritäten festlegender Zähler schrittweise weitergeschaltet wird.—Patent Abstracts of Japan, Band 6, Nr. 175 (P-141) (1053), Appl. No. 55—166582.

Gemäß "Electronic Design" Nr. 11, Seiten 128 bis 133 ist es weiterhin bekannt, Prioritätsauswahleinrichtungen zur Steuerung des Zugriffs von mehreren Prozessoren verschiedener Prioritätsklassen zu einem gemeinsamen Bus-System durch eine programmierbare Logikschaltung zu realisieren.

In Multiprozessoranlagen sind häufig mehrere unabhängig adressierbare Speichermodule vorhanden, zu denen die Prozessoren zugreifen können. Des geschieht über einen sogenannten Vermittlungsknoten der gewöhnlich aus der Prioritätslogik und aus einer Durchschaltesteuerung zur Übermittlung von Anforderungsparametern, wie Modus-Signalen und Adressen, eines Prozessors an den von diesem Prozessor adressierten Speichermodul besteht. Wenn sich die Prioritätslogik für die Anforderung eines Prozessors entschieden hat, wird die Durchschaltesteuerung belegt. Ist jedoch das gewünschte Speichermodul anderweitig in Anspruch genommen, dann bleibt der Vermittlungsknoten blockiert, auch wenn ein zweiter Prozessor auf ein anderes, möglicherweise freies Modul zugreifen möchte. Diese unnötigen Wartezeiten lassen sich gemäß US—A—3478321 mit Hilfe eines Look-Ahead-Verfahrens weitgehend vermeiden. Hiebei wird vor der Belegung der Durchschaltesteuerung geprüft, ob das von dem Prozessor mit der jeweils höchsten Priorität angeforderte Speichermodul verfügbar ist. Ist das nicht der Fall, dann wird diese Anforderung zurückgestellt, die Prioritätslogik freigegeben und eine gegebenenfalls vorliegende Anforderung eines Prozessors mit niedrigerer Priorität in gleicher Weise untersucht. Verläuft diese Prüfung positiv, dann erfolgt die Durchschaltung der Anforderungsparameter zu dem angeforderten Speichermodul.

In der Praxis erweist es sich als vorteilhaft, sowohl die Prioritätsvertauschung als auch das Look-Ahead-Verfahren anzuwenden. Die Kombination der bisher vorgeschlagenen Schaltungsanordnungen zur Durchführung der beiden Maßnahmen führt jedoch zu einer Gesamtschaltung, die wenig übersichtlich ist und einen hohen Aufwand erfordert.

Der Erfindung liegt die Aufgabe zugrunde, eine Schaltungsanordnung anzugeben, die die Prioritätslogik einschließlich der Prioritätsvertauschung umfaßt, die Durchführung des Look-Ahead-Verfahrens ermöglicht, bei besserer Übersichtlichkeit geringeren Aufwand erfordert und an veränderte Voraussetzungen in Bezug auf die Zahl der Prozessoren und Speichermoduln leichter anpassungsfähig ist. Gemäß der Erfindung wird diese Aufgabe durch die im Patentanspruch 1 angegebenen Markmale gelöst.

Im folgenden wird die Erfindung anhand eines in der Zeichnung dargestellten Ausführungsbeispiels näher beschrieben, Es zeigt:

Fig. 1 eine Übersicht über ein Prozessor-Speicher-Verbindungssystem,

Fig. 2a u. 2b eine Anforderungsauswahlsteuerung gemäß der Erfindung.

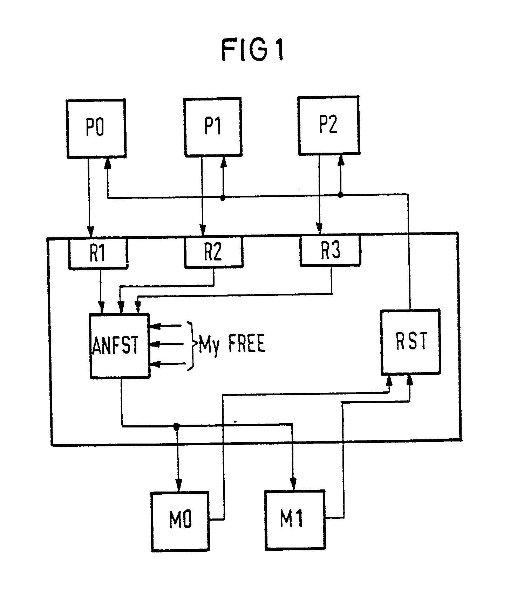

Die Figur 1 zeigt das Schema eines Prozessor-Speicher-Verbindungssystems mit p=3 Prozessoren PO—P2, die zu m=2 Speichermoduln MO und M1 zugreifen können. Jedem Prozessor ist ein Register R1 bis R3 zur Zwischenspeicherung der schon erwähnten Zugriffs-oder Anforderungsparameter und der Schreibdaten zugeordnet. Sollen, wie üblich, Speicherzugriffe mit fortlaufenden Adressen (streaming) möglich sein, sind im allgemeinen mehrerer solcher Register hintereinander vorgesehen. Das gilt vor allem dann, wenn die Prozessoren die Daten schneller ausgeben als ihre Eingabe in den Speichermodul erfolgt.

Eine weitere logische Ebene wird durch die Verbindungssteuerungen gebildet. Hierunter fallen die Anforderungssteuerung ANFST und eine Übertragungssteuerung RST, welche die Übermittelung der Lesedaten aus den Speichermoduln MO und M1 zu den Prozessoren PO bis P2 regelt. Der Anforderungssteuerung zugerechnet sind auch Multiplexeranordnungen zur Durchschaltung der Anforderungsparameter und der Schreibdaten. Auf die genannten Einrichtungen zur Übertragung von Parametern und Daten soll im folgenden nicht näher eingegangen werden. Es genügt, festzuhalten, daß die Wegedurchschaltung zwischen dem anfordernden Prozessor und dem von ihm durch bestimmte signifikanten Adressenbits adressierten Speichermodul nur dann erfolgt, wenn dieser auch verfügbar, d.h. nicht anderweitig belegt ist.

Jeder der zu einem Multiprozessorsystem zusammengeschlossenen p Prozessoren kennzeichnet seine Absicht, zum Speicher zuzugreifen, durch ein Signal P×STROBE (x=0...p−1) Es wird davon ausgegangen, daß dieses Signal stets von einer Adresse begleitet ist, die neben einem modulinternen Speicherplatz den gewünschten Speichermodul My(y=0...m−1) selbst aus der Gesamtzahl m der vorhandenen Speichermoduln auswählt. Weiter wird vorausgesetzt, daß jeder Speichermodul My ein Signal MyFREE zur Anzeige seines Belegungszustandes aussenden kann. Vorzugsweise wird das Signal MyFREE schon kurz

2

**0 100 460**

vor Beendigung einer laufenden Speicheroperation ausgegeben, da die Vorbereitung eines neuen Speicherzugriffs eine gewisse Zeit in Anspruch nimmt.

Treffen von mehreren Prozessoren gleichzeitig oder nahezu gleichzeitig Anforderungs-Steuersignalen ein oder liegen bereits noch nicht bedingte Anforderungen vor, dann wird zunächst der vorrangige Prozessor ermittelt. Erweist sich der von dem allein anfordernden bzw. ausgewählten Prozessor gewünschte Speichermodul als belegt, was sich anhand der von den Speichermoduln gelieferten Belegungsinformationen leicht erkennen läßt, dann wird das Anforderungs-Steuersignal dieses Prozessors vorläufig zurückgestellt. Damit besteht die Möglichkeit, daß sich nun die schon ursprünglich vorliegenden oder inzwischen eingegangenen Anforderungen weiterer Prozessoren unverzüglich durchsetzen können.

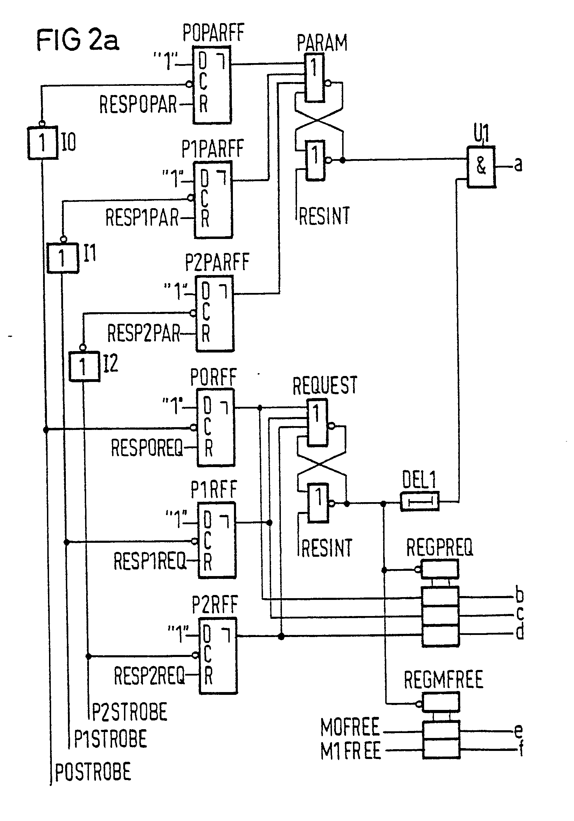

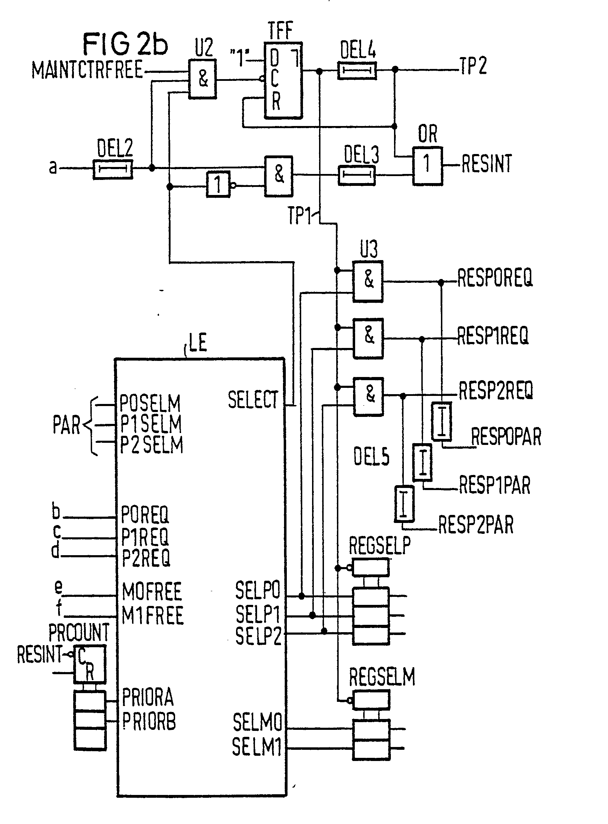

Eine für die Ausführung der geschilderten Maßnahmen geeignete Schaltungsanordnung ist in den Figuren 2a und 2b dargestellt. Die zwischen den Schaltungssteilen in Figur 2a und 2b übergreifenden Verbindungslinien sind zur leichteren Erkennbarkeit ihrer Zusammengehörigkeit mit Kleinbuchstaben bezeichnet. Einige weitere Verbindungen sind aus Gründen der basseren Übersicht nicht eingezeichnet. Die Zusammengehörigkeit der entsprechenden Anschlußpunkte ist durch ihre übereinstimmende Kennzeichnung mit Signalnamen erkennbar.

Einige weitere Verbindungen sind aus Gründen der besseren Übersicht nicht eingezeichnet. Die Zusammengehörigkeit der entsprechenden Anschlußpunkte ist durch ihre übereinstimmende Kennzeichnung mit Signalnamen erkennbar.

Jeden der (in Figur 2a nicht dargestellten) Prozessoren P0 bis P2 ist eine Anforderungskippstufe zugeordnet, an deren Takteingängen die Anforderungs-Steuersignale P0STROBE, P1STROBE bzw. P2STROBE anliegen. Die Dateneingänge sind mit einem dem hohen binären Signalpegel entsprechenden Potentiel verbunden. Die Anforderungskippstufen P0RFF bis P2RFF sind, für alle weiteren Kippstufen, die nicht ausdrücklich davon ausgenommen sind, sogenannte Master-Slave-Flip-Flops, bei denen die einzugebende Information am Ausgang erst mit der abfallenden Flanke eines positiven Übernahmetaktimpulses erscheint. Da die eingesetzten Master-Slave-Flip-Flops, wie aus der Zeichnung ersichtlich ist, Eingänge für inverse Übernahmetaktimpulse besitzen, erfolgt die Einstellung der Ausgänge auf die am Dateneingang anliegende Information bei positiven Flanken der Übernahmeimpulse.

Die Ausgänge der Anforderungskippstufen P0RFF bis P2RFF sind mit den Setzeingängen einer in bekannter Weise aus zwei überkreuz rückgekoppelten NOR-Gliedern gebildeten, asynchronen RS-Kippstufe REQUEST und mit den Dateneingängen eines Registers REGPREQ verbunden. Das für das Rücksetzen der RS-Kippstufe REQUEST vorgesehene Signal RESINT möge zunächst den binären Wert "Null" haben und die Kippstufe REQUEST ·somit nicht beeinflussen.

Das Setzen der RS-Kippstufe REQUEST durch das zuerst eingetroffene Anforderungs-Steuersignal, beispielsweise durch das Signal P0STROBE, löst weitere Vorgänge aus, die im folgenden behandelt werden.

Vorher ist jedoch noch darauf hinzuweisen, daß die RS-Kippstufe REQUEST auch nach Beendigung eines nach Abschluß einer vorausgehenden Auswahlentscheidung ausgegebenen Rücksetzsignals RESINT (RESINT für Zwischenräume Null) erneut gesetzt wird, wenn mindestens eine der Anforderungsstufen P0RFF bis P2RFF bereits gesetzt ist.

Durch das Setzen der RS-Kippstufe REQUEST werden die bisher transparenten Register REGPREQ und REGMFREE verriegelt. Wie ersichtlich, sind die Dateneingänge des Registers REGPREQ mit den Ausgängen der Anforderungs-Kippstufen P0RFF bis P2RFF verbunden, an den Dateneingängen des Registers REGMFREE liegen die schon genannten Modulfrei-Signale M0FREE und M1FREE an. Mit der Verriegelung der Register REGPREQ und REGMFREE ändern sich deren Ausgängssignale auch bei einer Veränderung der Konstellation der Eingangssignale nicht mehr. Da die Verriegelung asynchron zu gegebenenfalls noch eingehenden Anforderungs-Steuersignalen und Modulfrei-Signalen erfolgt, muß vor der Weiterverarbeitung der Registerausgangssignale eine Feste Zeit $\tau1$ abgewartet werden, um evt1. Einschwingvorgänge abklingen zu lassen. Da beide Register stets gleichzeitig und gleichsinnig gesteuert werden, können sie auch durch ein gemeinsames Register ersetzt werden.

Neben der Festlegung der beim Setzen der RS-Kippstufe REQUEST vorliegenden Anforderungen und· Modulfrei-Signale ist auch die Gültigkeit der die Anforderungen begleitenden Parameter, hier insbesondere der Adressen P×SELM für die Bestimmung des gewünschten Speichermoduls von Bedeutung. Die von den Prozessoren P0 bis P3 gelieferten Auswahladressen werden in binär codierter Form geliefert. Die Angabe POSELM=0 dedeutet die Adressierung des Speichermoduls M0 durch den Prozessor P0, während beispeilsweise P2SELM=1 besagt, daß der Prozessor P2 den Speichermodul M1 anfordert. Die Adressenangaben werden selbstverständlich nur beachtet, wenn der betreffende Prozessor tatsächlich eine Anforderung gestellt hat.

Die Gültigerklärung der Modulauswahladressen und der übrigen, im vorliegenden Zusammenhang nicht näher interessierenden Parameter geschieht mit der fallenden Flanke der Anfordergungs-Steuersignale P0STROBE bis P2STROBE. Zu diesem Zweck werden die mit Hilfe von Invertern I0 bis I2 invertierten Signale den Takteingängen von weiteren Anforderungskippstufen P0PARFF bzw. P2PARFF zugeführt, deren Dateneingänge an dem der binären "1" entsprechenden Potential liegen. Die Ausgänge der Anforderungskippstufen P0PARFF bis P2PARFF sind mit den Setzeingängen einer aus zwei NOR-Gliedern mit gegenseitiger Rückkopplung gebildeten RS-Kippstufe PARAM verbunden. Die RS-Kippstufe PARAM wird also indirekt durch die Rückflanke des zuerst eingegangenen Anforderungs-

3

# 0 100 460

Steuersignals oder durch den Wegfall des schon genannten Rücksetzsignals RESINT gesetzt, wenn zu diesem Zeitpunkt mindestens eine der Anforderungskippstufen P0PARFF bis P2PARFF bereits gesetzt war. Das Setzen der RS-Kippstufe PARAM kennzeichnet die Gültigkeit der Parameter.

Die Ausgänge der RS-Kippstufen REQUEST und PARAM sind mit den Eingängen eines UND-Glieds U1 verbunden, wobei in den ersten Verbindungsweg ein Verzögerungsglied DEL1 mit der schon erwähnten Signallaufzeit τ1 von etwa 18ns eingefügt ist. Das Ausgangssignal des UND-Gliedes U1 dient zur Erzeugung von Taktimpulsen und des Rücksetzsignals RESINT. Auf Einzelheiten wird noch eingegangen werden.

Die an den Ausgängen der Register REGPREQ und REGMFREE anliegenden Informationen P0REQ bis P2REQ und M0FREE, M1FREE, sowie die Modulauswahladressen P0SELM bis P2SELM und die Ausgangssignale PRIORA und PRIORB eines durch jedes Freigabesignal RESINT um eine Zähleinheit weitergeschalteten Binärzählers PRCOUNT zur Prioritätsvertauschung werden einer Logikeinheit LE zugeführt. Der Zählerstand das Zählers PRCOUNT bestimmt in an sich bekannter Weise die Prioritätsreihenfolge der Prozessoren P0 bis P2. Sie läßt sich in folgender Weise den Ausgangssignalen PRIORA und PRIORB des Zählers PRCOUNT zuordnen.

| PRIORA | 0 | 1 | 0 |
|---|---|---|---|
| PRIORB | 0 | 0 | 1 |
| Prioritäts-Reihenfolge | P0 | P2 | P1 |
| | P1 | P0 | P2 |
| | P2 | P1 | P0 |

Die Logikeinheit LE bildet durch die logische Verknüpfung der genannten Eingangssignale die Ausgangssignale SELP0 bis SELP2 zur Kennzeichnung des ausgewählten Prozessors, SELM0 oder SELM1 zur Kannzeichnung des angeforderten und freien Speichermoduls und das Signal SELECT, dessen logisches Wert "1" angibt, daß eine Anforderung erfolgreich war. Hat dagegen der Prozessor mit der augenblicklich höchsten Priorität einen belegten Speichermodul angefordert, führen alle Ausgänge der Logikeinheit den logischen Wert "0".

Für die Erzeugung der Ausgangssignale der Logikeinheit LE gilt allgemein:

a) Die Auswahl eines Speichermoduls erfolgt, wenn ein Prozessor eine Anforderung an diesen Modul stellt, wenn dieser Modul frei ist und wenn nicht gleichzeitig eine Anforderung eines Prozessors mit höherer Priorität vorliegt.

b) Die Auswahl eines Prozessors erfolgt, wenn dieser Prozessor eine Anforderung an einen Speichermodul stellt, wenn dieser Modul frei ist und wenn nicht gleichzeitig eine Anforderung eines Prozessors mit höherer Priorität vorliegt.

Damit lassen sich die folgenden logischen Gleichungen aufstellen:

$SELM0 = POREQ \cdot \overline{POSELM} \cdot MOFREE \cdot \overline{PRIORA} \cdot \overline{PRIORB}$
$\qquad + POREQ \cdot \overline{POSELM} \cdot MOFREE \cdot PRIORA \cdot \overline{PRIORB} \cdot \overline{P2REQ}$
$\qquad + POREQ \cdot \overline{POSELM} \cdot MOFREE \cdot \overline{PRIORA} \cdot PRIORB \cdot \overline{P1REQ} \cdot \overline{P2REQ}$
$\qquad + P1REQ \cdot \overline{P1SELM} \cdot MOFREE \cdot \overline{PRIORA} \cdot \overline{PRIORB} \cdot \overline{POREQ}$
$\qquad + P1REQ \cdot \overline{P1SELM} \cdot MOFREE \cdot PRIORA \cdot \overline{PRIORB} \cdot \overline{P2REQ} \cdot \overline{POREQ}$
$\qquad + P1REQ \cdot \overline{P1SELM} \cdot MOFREE \cdot \overline{PRIORA} \cdot PRIORB$
$\qquad + P2REQ \cdot \overline{P2SELM} \cdot MOFREE \cdot \overline{PRIORA} \cdot \overline{PRIORB} \cdot \overline{POREQ} \cdot \overline{P1REQ}$
$\qquad + P2REQ \cdot \overline{P2SELM} \cdot MOFREE \cdot PRIORA \cdot \overline{PRIORB}$
$\qquad + P2REQ \cdot \overline{P2SELM} \cdot MOFREE \cdot \overline{PRIORA} \cdot PRIORB \cdot \overline{P1REQ};$

$SELM1 = POREQ \cdot POSELM \cdot M1FREE \cdot \overline{PRIORA} \cdot \overline{PRIORB}$
$\qquad + POREQ \cdot POSELM \cdot M1FREE \cdot PRIORA \cdot \overline{PRIORB} \cdot \overline{P2REQ}$
$\qquad + POREQ \cdot POSELM \cdot M1FREE \cdot \overline{PRIORA} \cdot PRIORB \cdot \overline{P1REQ} \cdot \overline{P2REQ}$
$\qquad + P1REQ \cdot P1SELM \cdot M1FREE \cdot \overline{PRIORA} \cdot \overline{PRIORB} \cdot \overline{POREQ}$
$\qquad + P1REQ \cdot P1SELM \cdot M1FREE \cdot PRIORA \cdot \overline{PRIORB} \cdot \overline{P2REQ} \cdot \overline{POREQ}$
$\qquad + P1REQ \cdot P1SELM \cdot M1FREE \cdot \overline{PRIORA} \cdot PRIORB$
$\qquad + P2REQ \cdot P2SELM \cdot M1FREE \cdot \overline{PRIORA} \cdot \overline{PRIORB} \cdot \overline{POREQ} \cdot \overline{P1REQ}$
$\qquad + P2REQ \cdot P2SELM \cdot M1FREE \cdot PRIORA \cdot \overline{PRIORB}$
$\qquad + P2REQ \cdot P2SELM \cdot M1FREE \cdot \overline{PRIORA} \cdot PRIORB \cdot \overline{P1REQ};$

$$\text{SELP0} = \text{P0REQ} \cdot \overline{\text{P0SELM}} \cdot \text{M0FREE} \cdot \overline{\text{PRIORA}} \cdot \overline{\text{PRIORB}}$$
$$+ \text{P0REQ} \cdot \overline{\text{P0SELM}} \cdot \text{M0FREE} \cdot \text{PRIORA} \cdot \overline{\text{PRIORB}} \cdot \overline{\text{P2REQ}}$$
$$+ \text{P0REQ} \cdot \overline{\text{P0SELM}} \cdot \text{M0FREE} \cdot \overline{\text{PRIORA}} \cdot \text{PRIORB} \cdot \overline{\text{P1REQ}} \cdot \overline{\text{P2REQ}}$$
$$+ \text{P0REQ} \cdot \text{P0SELM} \cdot \text{M1FREE} \cdot \overline{\text{PRIORA}} \cdot \overline{\text{PRIORB}}$$
$$+ \text{P0REQ} \cdot \text{P0SELM} \cdot \text{M1FREE} \cdot \text{PRIORA} \cdot \overline{\text{PRIORB}} \cdot \overline{\text{P2REQ}}$$
$$+ \text{P0REQ} \cdot \text{P0SELM} \cdot \text{M1FREE} \cdot \overline{\text{PRIORA}} \cdot \text{PRIORB} \cdot \overline{\text{P1REQ}} \cdot \overline{\text{P2REQ}};$$

Die Gleichungen für SELP1 und SELP2 sind der Gleichung für SELP0 weitgehend ähnlich, mit dem Unterschied, daß anstelle der auf P0 bezogenen Glieder die entsprechenden auf P1 bzw. P2 bezogenen Glieder stehen. Für die jeweils ersten Terme der Gleichungen gilt dann:

$$\text{SELP1} = \text{P1REQ} \cdot \overline{\text{P1SELM}} \cdot \text{M0FREE} \cdot \overline{\text{PRIORA}} \cdot \overline{\text{PRIORB}} + \ldots$$
$$\text{SELP2} = \text{P2REQ} \cdot \overline{\text{P2SELM}} \cdot \text{M0FREE} \cdot \overline{\text{PRIORA}} \cdot \overline{\text{PRIORB}} + \ldots$$

Alle Gleichungen sind aufgebaut als ODER-Verknüpfung verschiedener Produkt-Terme. Im vorliegenden Beispiel sind maximal 18 Produkt-Terme erforderlich. Auch das Signal SELECT (der ausgewählte Prozessor trifft auf einen freien Modul) kann durch ODER-Verknüpfung aller 18 Produkt-Terme erzeugt werden.

Die Realisierung dieser logischen Gleichungen könnte beispielweise durch PROM-Bausteine mit 10 Adresseingängen und 6 Ausgängen (1K×6 Bit) erfolgen. Da die Ausgangssignale im Ausführungsbeispiel wegen der teilweisen Abhängigkeit voneinander nur 7 verschiedene Kombinationen bilden können, entsteht eine erhebliche Redundanz. Günstiger ist dagegen die Verwendung einer programmierbaren Logikanordnung (PLA) aufgrund der geringeren Redundanz und der vergleichweise kurzen Signallaufzeit. Es werden 10 Eingänge, 18 Produkt-Terme und 6 Ausgänge benötigt.

Das Signal SELECT, das logisch der Disjunction der Signale SELP0 bis SELP2 oder SELM0 und SELM1 entspricht, ergibt sich praktisch durch die ODER-Verknüpfung aller 18 Produkt-Terme.

Mit dem Ausgangssignal des UND-Glieds U1, das mit Hilfe des Verzögerungsglieds DEL2 um die PLA-Signallaufzeit verzögert wird, wird das Signal SELECT bewertet. Ist SELECT=0 (keine Durchschaltung zum Speichermodul möglich, da belegt) bzw. nach Invertierung $\overline{\text{SELECT}}$=1, wird nach einer weiteren Verzögerung durch das Laufzeitglied DEL3 das schon mehrfach erwähnte Freigabesignal RESINT über das ODER-Glied OR ausgegeben. Anschließend kann eine neue Anforderungsauswahl eingeleitet werden.

Das verzögerte Ausgangssignal des UND-Glieds U1 setzt eine Kippstufe TFF, wenn gleichzeitig SELECT=1 (Durchschaltung zum Modul möglich) und die Zentralsteuerung des Vermittelungsknotens verfügbar ist, was durch das Signal MAINTCTRFREE gemeldet wird. Die Koinzidenz dieser Signale wird durch ein weiteres UND-Glied U2 festgestellt.

Das Setzen der Kippstufe TFF erzeugt einen ersten Taktimpuls TP1 und nach einer Verzögerung durch das Verzögerungsglied DEL4 einen zweiten Taktimpuls TP2. Der erste Taktimpuls TP1 bewirkt die Übernahme der Signale für die Prozessor-und Modulauswahl SELPx und SELMy in Register REGSELP bzw. REGSELM und bildet mit Hilfe der UND-Glieder U3 individuell eines der Freigabesignale RESP0REQ bis RESP2REQ sowie nach einer Verzögerung durch die Verzögerungsglieder DEL5 eines der weiteren Freigabesignals RESP0PAR bis RESP2PAR. Durch die beiden Freigabesignals werden diejenigen Anforderungskippstufen PxREFF und PxPARFF, die durch die erfolgreiche Anforderung gesetzt wurden, zurückgesetzt.

Die beschriebene Schaltungsanordnung kann überall dort eingesetzt werden, wo mehrere asynchrone Anforderungen zentral zusammengefaßt werden, wo unterschiedliche und veränderliche Prioritäten vergeben werden und wo eine Durchschaltung von Anforderung ohne gegenseitige Blockierung und Wartezeiten erforderlich ist.

Da in vielen Fällen die Zahl der eingesetzten Prozessoren und Speichermoduln von den Voraussetzungen des beschriebenen Ausführungsbeispiels abweichen wird, sind in der nachstehenden Tabelle zur Abschätzung der Zahlen der Eingänge, Produkt-Terme und Ausgänge der programmierbaren Logikanordnung PLA in Abhängigkeit von einigen ausgewählten Zahlen von Prozessoren und Speichermoduln angegeben. Die Angaben beziehen sich auf Ausführungen mit Prioritätsvertauschung.

| Anwendungsfall | | PLA | | |
|---|---|---|---|---|
| Prozessoren | Speichermoduln | Eingänge | Produktterme | Ausgänge |
| 2 | 2 | 7 | 8 | 5 |
| 2 | 4 | 11 | 16 | 7 |
| 3 | 2 | 10 | 18 | 6 |
| 4 | 2 | 12 | 32 | 7 |
| 4 | 4 | 18 | 64 | 9 |

# 0 100 460

Allgemein gilt für p Prozessoren und m Speichermoduln:

p+m+p . 1dm+1dp Eingänge,

$p^2$ . m Produkt-Terme und

p+m+1 Ausgänge,

wobei 1d den Logarithmus auf die Basis 2 bedeutet, der hier naturgemäß stats eine ganze gegebenenfalls aufgerundete Zahl sein muß.

Ohne Prioritätsvertauschung werden ebensoviele Ausgänge, aber nur p+m+p . 1dm Eingänge und p . m Produkt-Terme benötigt.

## Patentanpsrüche

1. Anforderungsauswahlsteuerung in einem Verbindungssystem zwischen mehreren unabhängig adressierbaren Speichermodulen (z.B. M0 und M1) und mehreren Prozessoren (z.B. P0 bis P2), die Operationsanforderungen an die Speichermodule richten, gekennzeichnet

— durch Anforderungskippstufen (PxRFF) zur getrennten zeitweiligen Speicherung von Anforderungssteuerungssignalen (PxSTROBE) der einzelnen Prozessoren (Px),

— durch eine weitere RS-Kippstufe (REQUEST), die durch eine vorliegende Anforderung gesetzt und durch ein Freigabesignal (RESINT) zurückgesetzt wird, das das Zustandekommen einer Prozessor-Speicher-Verbindung oder die Feststellung der Belegung des von dem Prozessor mit der augenblicklich höchsten Priorität angeforderten Speichermoduls signalisiert,

— durch Register (REGPREQ, REGMFREE) zur Einspeicherung der beim Setzen der RS-Kippstufe (REQUEST) vorliegenden Anforderungssteuersignale (PxSTROBE) und von den Belegungszustand der Speichermodule (My) anzeigenden Modulfrei-Signalen (MyFREE),

— durch einen durch das Freigabesignal (RESINT) schrittweise fortschaltbaren Binärzähler (PRCOUNT) zur Prioritätsvertauschung, dessen Zählvolumen der Anzahl (p) der Prozessoren (Px) entspricht und dessen Zählerstand die Prioritätsreihenfolge der Prozessoren bestimmt,

— durch eine programmierbare Logikanordnung (LE), die bei p Prozessoren (Px, x=0...p−1) und m Speichermodulen (My, y=0...m−1) insgesamt $p^2$ . m Produkt-Terme bildet, sowie p+m+p . 1d m+1d p Eingänge und p+m+1 Ausgänge aufweist, wobei an den Eingängen die in den Registern (REGPREQ, REGMFREE) gespeicherten Anforderungs-Steuersignale (PxREQ) und die Modulfrei-Signale (MyFREE) sowie die Ausgangssignale (PRIORA, PRIORB) des Binärzählers (PRCOUNT) zur Prioritätsvertauschung und die Adressen (PxSELM) der von den anfordernden Prozessoren (P0 bis P1) adressierten Speichermodule (M0, M1) anliegen, während an den Ausgängen Signale (SELPx, SELMy) zur einzelnen Kennzeichnung des ausgewählten Prozessors (Px) und des adressierten Speichermoduls (My) sowie ein die Verfügbarkeit des adressierten Speichermoduls (My) kennzeichnendes Signal (SELECT) verfügbar sind.

2. Anforderungsauswahlsteuerung nach Anspruch 1, dadurch gekennzeichnet, daß ein weiterer Satz von Anforderungskippstufen (PxPARFF) vorgesehen ist, die durch die Rückflanken der Anforderungs-Steuersignale (PxSTROBE) gesetzt werden und deren Ausgänge mit den Setzeingängen einer zweiten RS-Kippstufe (PARAM) verbunden sind, daß die zweite RS-Kippstufe (PARAM) durch das Freigabesignal (RESINT) zurückgesetzt wird und daß der nicht invertierende Ausgang der zweiten RS-Kippstufe (PARAM) mit dem nicht invertierenden Ausgang der ersten RS-Kippstufe (REQUEST) gemäß einer UND-Verknüpfung verbunden ist.

## Revendications

1. Circuit de commande de sélection de demandes dans un système de liaison entre plusieurs modules de mémoire (par exemple M0 et M1) adressables d'une manière indépendante et plusieurs processeurs (par exemple P0 à P2), qui envoient les demandes d'opérations aux modules de mémoire, caractérisé

— par des étages à bascule bistable (PxRFF) de transfert de demandes pour la mémorisation temporaire séparée de signaux de commande de demandes (PxSTROBE) des différents processeurs (Px),

— par un autre étage à bascule bistable de type RS (REQUEST), qui est positionné par une demande présente et est ramené à l'état initial par un signal de libération (RESINT), qui signale l'établissement d'une liaison processeurmémoire ou la détermination de l'occupation du module de mémoire demandé par le processeur avec la priorité qui est la plus élevée à cet instant,

— par des registres (REGPREQ, REGMFREE) servant à mémoriser des signaux de commande de demandes (PxSTROBE) présents lors du positionnement de l'étage à bascule bistable de type RS (REQUEST), et de signaux de libération de module (MyFREE) indiquant l'état d'occupation des modules de mémoire (My),

— par un compteur binaire (PRCOUNT), que fait avancer pas-à-pas le signal de libération (RESINT) et qui sert à réaliser la permutation des priorités et dont la capacité de comptage correspond au nombre (p) des processeurs (Px) et dont l'état de comptage détermine la suite des priorités des processeurs,

6

**0 100 460**

— par un circuit logique programmable (LE) qui, dans le cas de p processeurs (Px, x=0...p−1) et m modules de mémoire (My, y=0...m−1), forme au total p² . m termes de produits et comporte p+m+p . 1d m+1d p entrées et p+m+1 sorties, auquel cas les signaux de commande de demande (PxREQ), qui sont mémorisés dans les registres (REGPREQ, REGMFREE) et les signaux (MyFREE) de libération de module ainsi que les signaux de sortie (PRIORA, PRIORB) du compteur binaire (PRCOUNT) pour la permutation des priorités et les adresses (PxSELM) des modules de mémoire (M0, M1) adressées par les processeurs demandeurs (P0 à P1) sont appliqués aux entrées, tandis que des signaux (SELPx, SELMy) servant à caractériser de façon individuelle le processeur (Px) sélectionné et le module de mémoire (My) adressé ainsi qu'un signal (SELECT) caractérisant la disponibilité des modules de mémoire (My) adressés, sont disponibles sur les sorties.

2. Circuit de commande de sélection de demandes suivant la revendication 1, caractérisé par le fait qu'il est prévu un autre ensemble d'étages à bascule bisable (PxPARFF) de transfert de demandes, qui sont positionnés par les flancs arrière des signaux de commande de demandes (PxSTROBE) et dont les sorties sont reliées aux entrées de positionnement d'un second étage à bascule bistable de type RS (PARAM), que le second étage à bascule bistable de type RS (PARAM) est ramené à l'état initial par le signal de libération (RESINT) et que la sortie non inverseuse du second étage à bascule bistable de type RS (PARAM) est reliée à la sortie non inverseuse du premier étage à bascule bistable de type RS (REQUEST), conformément à une combinaison logique ET.

**Claims**

1. A request selection control unit in a connection system between a plurality of independently addressable storage modules (e.g. M0 and M1) and a plurality of processors (e.g. P0 to P2) which direct operation requests to the storage modules, characterised by

— request flip-flops (PxRFF) for the separate, temporary storage of request control signals (PxSTROBE) of the individual processors (Px),
— a further RS-flip-flop (REQUEST) which is set by the existance of a request and is reset by a release signal (RESINT) which signals the establishment of a processor-store connection or signals the seizure of the storage module requested by the processor which currently has the highest priority,
— registers (REGPREQ, REGMFREE) which store the request control signals (PxSTROBE) which occur when the RS-flip-flop (REQUEST) is set, and module-free-signals (MyFREE) which indicate the availability status of the storage modules (My),
— a binary counter (PRCOUNT) for priority permutation which is advanced in stepped fashion by the release signal (RESINT) and whose counting volume corresponds to the number (p) of processors (Px) and whose count determines the priority sequence of the processors,
— a programmable logic arrangement (LE) which, with p processors (Px, x=0...p−1) and m storage modules (My, y=0...m−1) forms a total of p² . m product terms and has p+m+p . 1d m+1d p inputs and p+m+1 outputs, where the request control signals (PxREQ) stored in the registers (REGPREQ, REGMFREE), the module-free signals (MyFREE), the output signals (PRIORA, PRIORB) of the binary counter (PRCOUNT) for priority permutation, and the addresses (PxSELM) of the storage modules (M0, M1) addressed by the requesting processors (P0 to P1) occur at the inputs,

whereas signals (SELPx, SELMy) for the individual identification of the selective processor (Px) and of the address storage module (My), and a signal (SELECT) which characterises the availability of the addressed storage module (My) are available at the outputs.
2. A request selection control unit as claimed in claim 1, characterised in that a further set of request flip-flops (PxPARFF) is provided which are set by the rear flanks of the request control signals (PxSTROBE) and whose outputs are connected to the setting inputs of a second RS-flip-flop (PARAM), that the second RS-flip-flop (PARAM) is reset by the release signal (RESINT) and that the non-inverting output of the second RS-flip-flop (PARAM) is connected to the non-inverting output of the first RS-flip-flop (REQUEST) in accordance with an AND-logic-link.

7

## FIG 1

FIG 2a

0 100 460

0 100 460

FIG 2b

3